# EUROPEAN PATENT SPECIFICATION

(11) **EP 0 539 637 B1**
(45) Date of publication and mention of the grant of the patent: **03.04.1996**
(21) Application number: 91310107.7
(22) Date of filing: 01.11.1991
(51) Int. Cl.: H02P 5/46

(54) **Simultaneously operative multi-unit AC or DC series excitation motors or compound motors interlock driving circuit device**
Mehrere gleichzeitig und wahlweise mit Gleich- oder Wechselstrom betriebene Motoren mit Verbund- oder Reihenschluss-Erregerwicklungen und Schaltungsvorrichtung zur Synchronisationssteuerung
Multiples moteurs compounds ou moteurs à excitations séries à courant continu ou alternatif fonctionnant simultanément et dispositif à circuit de commande de synchronisation

(43) Date of publication of application: 05.05.1993
(73) Proprietor: Yang, Tai-Her, Taipei (TW)
(72) Inventor: Yang, Tai-Her, Taipei (TW)
(74) Representative: Arthur, Bryan Edward

(56) References cited:
- FR-A- 749 458
- SOVIET INVENTIONS ILLUSTRATED Section PQ, Week 8849, 25 January 1989 Derwent Publications Ltd., London, GB; Class Q36, AN 352927

## Description

In conventional AC or DC series excitation motors the rotational speed increases very fast under no load owing to their square low characteristic. When each independent load or a common load is driven simultaneously and is unsteady, it is usually necessary to prevent the partial load from reducing so suddenly as to accelerate the related series excitation motors. Particularly when the same load is jointly driven and an unsteady coupling relationship is formed between the load and motor assembly, each respective motor will accelerate or decelerate suddenly and further affect the stability of load, for example, when dual series excitation or compound motors are used to drive the respective side wheels of a loading machine. In such an arrangement the conventional dual series excitation (or compound) motors are normally connected in series or parallel to drive the loading machine forward, but owing to varying coupling with the ground, the motor assembly runs fast and slow intermittently which makes operation difficult.

An object of the present invention is to provide steady driving under fluctuating load conditions.

SOVIET INVENTIONS ILLUSTRATED, Section PQ, Week 8849, 25 January 1989 (and SU-A-1,400,998) discloses an electric motor arrangement comprising a plurality of electric motors simultaneously arranged to drive varying loads, the armature of a first electric motor being connected in series with the series excitation winding of a second electric motor via a first terminal and the armature of a second electric motor being connected in series with the series excitation winding of the first electric motor via a second terminal.

The present invention provides an electric motor arrangement as disclosed in the above mentioned SOVIET INVENTIONS ILLUSTRATED publication characterised by a protective resistance connected between said first and second terminals and arranged to limit the circulating current between said armatures.

Preferred features are defined in the dependent claims.

Preferred embodiments of the invention are described below with reference to Figs. 1 to 4 of the accompanying drawings, wherein:
FIG. 1 is a diagram showing a dual series excitation (or compound) motor arrangement in accordance with the invention;
FIG. 2 is a diagram showing a multi-unit series excitation (or compound) motor arrangement in accordance with the invention;
FIG. 3 is a diagram of a further arrangement in accordance with the invention, showing a tapped-control circuit that can control operational speed and switch operational ratio, and
FIG. 4 is a diagram of a further arrangement in accordance with the invention showing an independent tapped-switch ratio operation and speed control circuit for each field.

As noted above, conventional AC or DC series excitation motors have the characteristic that rotational speed increases very fast under no load conditions. When each independent load or a common load is driven simultaneously operations and fluctuates, it is usually necessary to prevent the partial load reducing so suddenly as to accelerate the related series excitation motors during operation, particularly when the same load is jointly driven and an unsteady coupling relationship is formed between the load and motor assembly.

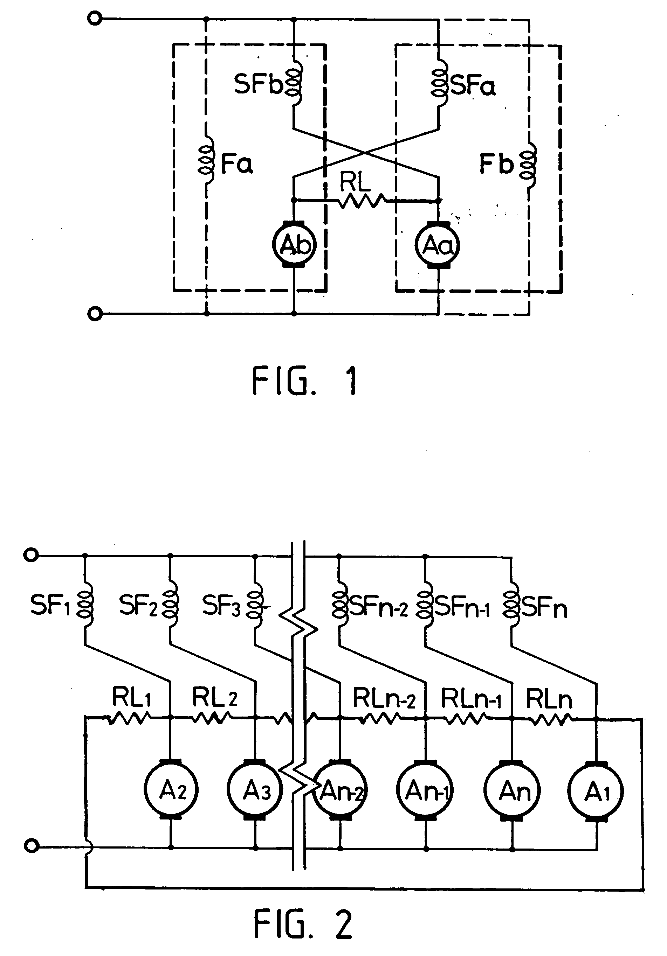

Referring to FIG. 1, a first series excitation motor assembly A has a series excitation magnetic winding SFa and armature Aa, and a second series excitation motor assembly B has a series excitation magnetic winding SFb and armature Ab. The series excitation magnetic winding SFa of the first series excitation motor assembly is in series with the armature Ab of the second series excitation motor assembly, and the series excitation magnetic winding SFb of the second series excitation motor assembly is in series with the armature Aa of the first series excitation motor assembly. When the load is steady and even during the operation of the two motors, equal current passes through SFa, Aa, Sfb and Ab and the operational speeds are equal too. Furthermore, the speed of the two motors is increased/decreased simultaneously according to the load. For example when motor assembly A's load is increased, the rotational speed of armature Aa is reduced and current is increased, but owing to the armature Aa being series with the magnetic field Sfb of motor B, the increase of the Sfb current enables the magnetic field of armature Ab of motor assembly B to be enhanced with the result that the rotational speed of armature Ab of motor assembly B is reduced accordingly. In like manner, when the load of motor assembly A gets weaker suddenly, armature Aa's current is decreased and the magnetic field of series magnetic winding SFb gets weaker too, with the result that the rotary speed of armature Ab of motor assembly B increases. In like manner, when the load of motor assembly B is increased, owing to armature Ab being in series with magnetic winding Sfa of motor assembly A, the rotational speed of motor assembly A is reduced; in like manner, when the load of motor assembly B is reduced suddenly, motor assembly B gets faster and during idle running, the field of Sfb is reduced to accelerate armature Aa of motor assembly A.

As shown in FIG. 1 a resistance RL is connected between the junction of Aa and SFb and the junction of Ab and SFb to limit the circulating current between the two armatures when armature Ab and armature Aa are subjected to transients of different voltage, and prevent armature burn-out. As shown in the diagram additional field windings Fa and Fb may be provided in which case the motor arrangement is a compound arrangement.

In like manner, multiple motors may be connected as shown in FIG. 2, which shows multiple protective resistances RL1 to RLn.

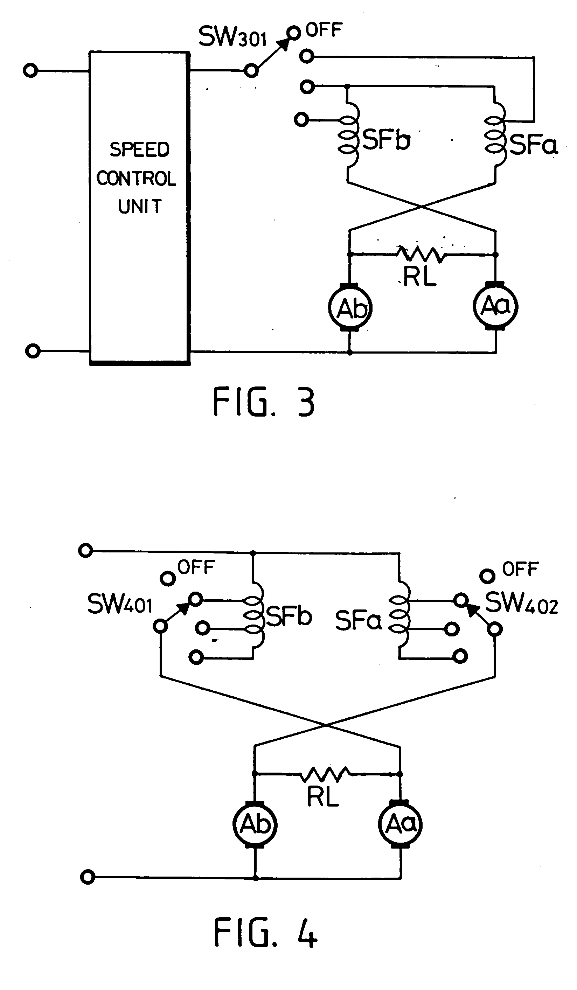

With characteristics as mentioned above, simultaneously operative multiple AC or DC series excitation motors or compound motors in an arrangement according to the present invention are particularly suitable for use with an unsteady load, and in particular enable the rotational speed of the two motors to be steadied. In actual practice, one may further use electrodynamic or solid state elements for motor speed control and/or driving direction control, e.g. comprising conventional chopper, phase control or voltage control arrangements. Furthermore, owing to the two series windings SFa and SFb having an interconnected connector, they may be tapped to control the operational ratio between the two motors as shown in FIG. 3. This tapped-control circuit can control operational speed and switch operational ratio.

To switch operational ratio as mentioned above, the windings SFa and SFb may be independently tapped to provide speed control circuit each field as shown in FIG. 4 In this embodiment the fields SFa and SFb each have a tap leading to the distribution connection of a selective switch SW401 and SW402 respectively, and the common connections of the selective switches are connected to armatures Aa and Ab respectively. Hence one can select steady operation ratio of the two motors by means of each selective switch. If it is intended to increase motor B's operational speed and reduce motor A's speed, then SFb is switched to a lower excitation gate number, causing armature Ab of motor B to speed up and increasing the SFa excitation current to make motor A slow down, and vice versa. To switch the operational direction of the motors of FIG. 1 to FIG. 4, it is only necessary to exchange the two taps of either the field winding or armature. The arrangement of Figures 3 and 4 have protection resistances RL similar to that of Figure 1.

To conclude, the arrangement according to the present invention is effective to prevent sudden changes in the running ratio between the motor assemblies.

## Claims

1. An electric motor arrangement comprising a plurality of electric motors simultaneously arranged to drive varying loads, the armature (Aa) of a first electric motor (A) being connected in series with the series excitation winding (SFG) of a second electric motor (B) via a first terminal and the armature (AG) of a second electric motor being connected in series with the series excitation winding of the first electric motor via a second terminal, characterised by a protective resistance (RL) connected between said first and second terminals and arranged to limit the circulating current between said armatures (Aa,Ab).

2. An electric motor arrangement according to claim 1, further comprising electrodynamic or solid state means for controlling the speed or direction of said motors.

3. An electric motor arrangement according to claim 1 wherein said series excitation windings (SFa,SFb) are connected to each other in series and switch means (SW301) is arranged to energise said series excitation windings in parallel via tappings on said series excitation windings to vary the speed ratio of the motors.

4. An electric motor arrangement according to claim 1 wherein each series excitation winding (SFa,SFb) are independently selectable by switch means (SW401,SW402) which enable the speed of each motor to be varied independently.

5. An electric motor arrangement according to any preceding claim wherein said motors are DC motors.

6. An electric motor arrangement according to any preceding claim wherein said motors are compound motors, having additional field windings (Fa,Fb) in parallel with their armatures (Aa,Ab).

## Patentansprüche

1. Anordnung elektrischer Motoren, mit einer Mehrzahl zusammen variierende Lasten antreibender elektrischer Motoren, wobei der Läufer (Aa) des ersten elektrischen Motors (A) über eine erste Anschlußklemme in Reihe mit der Reihenschlußerregerwicklung (SFb) eines zweiten elektrischen Motors (B) und der Läufer (Ab) des zweiten elektrischen Motors über eine zweite Anschlußklemme in Reihe mit der Reihenschlußerregerwicklung des ersten elektrischen Motors geschaltet ist, **gekennzeichnet durch** einen zwischen die erste und zweite Anschlußklemme geschalteten Schutzwiderstand (RL) zur Begrenzung des Stroms in dem zwischen den Anschlußklemmen (Aa, Ab) geschlossenen Stromkreis.

2. Anordnung elektrischer Motoren nach Anspruch 1, weiter mit elektrodynamischen Mitteln oder Festkörpermitteln zur Geschwindigkeits- oder Richtungsregelung der Motoren.

3. Anordnung elektrischer Motoren nach Anspruch 1, worin die Reibenschlußerregerwicklungen (SFa, SFb) miteinander in Reihe geschaltet sind und ein Schalter (SW301) zur parallelen Energieversorgung der Reihenschlußerregerwicklungen über deren Anzapfungen zur Veränderung der Geschwindigkeit der Motoren vorhanden ist.

4. Anordnung elektrischer Motoren nach Anspruch 1, worin jede Reihenschlußerregerwicklung (SFa, SFb) unabhängig durch Schalter (SW401, SW402) zur unabhängigen Veränderung der Geschwindigkeit der Motoren auswählbar ist.

5. Anordnung elektrischer Motoren nach einem der vorhergehenden Ansprüche, worin die Motoren Gleichstrommotoren sind.

6. Anordnung elektrischer Motoren nach einem der vorhergehenden Ansprüche, worin die Motoren Verbundmotoren mit zusätzlichen parallel zu den Läufern vorhandenen Erregerwicklungen (Fa, Fb) sind.

## Revendications

1. Montage de moteurs électriques comprenant une pluralité de moteurs électriques agencés simultanément pour entraîner des charges variables, l'induit (Aa) d'un premier moteur électrique (A) étant monté en série avec l'enroulement d'excitation série (SFG) d'un second moteur électrique (B) par l'intermédiaire d'une première borne et l'induit (AG) d'un second moteur électrique étant monté en série avec l'enroulement d'excitation série du premier moteur électrique par l'intermédiaire d'une seconde borne, caractérisé par une résistance de protection (RL) connectée entre ladite première et ladite seconde borne et choisie pour limiter le courant circulant entre lesdits induits (Aa, Ab).

2. Montage de moteurs électriques selon la revendication 1, comprenant encore un moyen électrodynamique ou à semi-conducteur pour commander la vitesse ou la direction desdits moteurs.

3. Montage de moteurs électriques selon la revendication 1, dans lequel lesdits enroulements d'excitation série (SFa, SHb) sont montés en série entre eux et un moyen commutateur (SW301) est installé pour exciter lesdits enroulements d'excitation en série en parallèle par l'intermédiaire de prises montées sur lesdits enroulements d'excitation série pour faire varier le rapport des vitesses des moteurs.

4. Montage de moteurs électriques selon la revendication 1, dans lequel chaque enroulement d'excitation série (SFa, SFb) peut être sélectionné de manière indépendante par des moyens de commutation (SW401, SW402) qui permettent de faire varier la vitesse de chaque moteur indépendamment.

5. Montage de moteurs électriques selon l'une quelconque des revendications précédentes dans lequel lesdits moteurs sont des moteurs à courant continu.

6. Montage de moteurs électriques selon l'une quelconque des revendications précédentes, dans lequel lesdits moteurs sont des moteurs compound, ayant des enroulements inducteurs supplémentaires (Fa, Fb) en parallèle avec leurs induits (Aa, AB).
